# EUROPÄISCHE PATENTSCHRIFT

(11) **EP 3 174 443 B1**
(45) Veröffentlichungstag und Bekanntmachung des Hinweises auf die Patenterteilung: **26.06.2019**
(21) Anmeldenummer: 15744212.0
(22) Anmeldetag: 29.07.2015
(51) Int. Cl.: A47J 43/07

(54) **VERARBEITUNG EINES NAHRUNGSMITTELS NACH VORBESTIMMTEN REZEPTDATEN MIT EINEM ELEKTRISCHEN KÜCHENGERÄT**
PROCESSING A FOOD ON THE BASIS OF PREDETERMINED RECIPE DATA WITH AN ELECTRICAL KITCHEN APPLIANCE
PRÉPARATION D'UNE DENRÉE ALIMENTAIRE SELON DES DONNÉES DE RECETTE PRÉDÉTERMINÉES AU MOYEN D'UN APPAREIL DE CUISINE ÉLECTRIQUE

(30) Priorität: 30.07.2014 DE 102014110832; 25.08.2014 DE 102014112115
(43) Veröffentlichungstag der Anmeldung: 07.06.2017
(73) Patentinhaber: Vorwerk & Co. Interholding GmbH, 42275 Wuppertal (DE)
(72) Erfinder: STACH, Christiane, 42477 Radevormwald (DE); CORNELISSEN, Markus, 53332 Bornheim (DE); WEBER, Klaus-Martin, 42109 Wuppertal (DE); HILGERS, Stefan, 45357 Essen (DE); GANNS, Julius, 42119 Wuppertal (DE)
(74) Vertreter: Müller, Enno
(86) Internationale Anmeldenummer: PCT/EP2015/067435
(87) Internationale Veröffentlichungsnummer: WO 2016/016337

(56) Entgegenhaltungen:
- EP-A1- 2 832 275
- WO-A1-2014/083029
- DE-A1-102010 037 769
- DE-A1-102013 106 691

## Beschreibung

Die Erfindung betrifft zunächst ein System mit wenigstens einem elektrischen Küchengerät zur Verarbeitung wenigstens eines Nahrungsmittels nach den Merkmalen des Oberbegriffes des Anspruches 1.

Weiter betrifft die Erfindung ein Verfahren zum Betrieb eines elektrischen Küchengerätes zur Verarbeitung wenigstens eines Nahrungsmittels nach vorbestimmten Rezeptdaten durch einen Verwender.

Elektrische Küchengeräte, wie sie dem System zugrunde liegen und in dem Verfahren benutzt sind, sind z.B. in Form von universellen Küchenmaschinen bekannt, die neben einem mechanischen Verarbeiten von Nahrungsmitteln, z.B. mittels eines Rührwerks und/oder Schneidmessers, auch ein Garen der Nahrungsmittel ermöglichen. Zur Herstellung einer entsprechenden Speise sind dabei vorbestimmte Rezepte vorgesehen, typischerweise in Form von in einem mit dem Küchengerät verbundenen Speicher abgelegten Rezeptdaten. Diese Rezeptdaten umfassen im Allgemeinen mehrere aufeinanderfolgende Rezeptschritte.

Um dem Benutzer eines derartigen elektrischen Küchengeräts das Herstellen einer Speise nach einem derartigen vorbestimmten Rezept zu erleichtern, können derartige Geräte eine Ausgabeschnittstelle zur Ausgabe von Informationen an einen Benutzer aufweisen. Mittels dieser Ausgabeschnittstelle kann der Benutzer z.B. aufgefordert werden, eine bestimmte Menge eines vorbestimmten Nahrungsmittels in das Gerät zu geben, eine bestimmte Rührstufe einzustellen und/oder eine bestimmte Garstufe zu wählen. Zum Eingeben entsprechender Steuerbefehle, mit denen das elektrische Küchengerät gesteuert wird, kann eine Eingabeschnittstelle vorgesehen sein, z.B. in Form eines Touchscreens.

Anbieter derartiger elektrischer Küchengerät sowie dafür vorgesehener Rezepte, bestehend aus entsprechenden Rezeptdaten, sind im Allgemeinen darum bemüht, möglichst universell einsetzbare Kochrezepte anzubieten. Gleichwohl können unterschiedliche Beschaffenheiten der zu verarbeitenden Nahrungsmittel sowie bestimmte Umgebungsparameter, wie eine besonders hohe Luftfeuchtigkeit oder eine hohe Umgebungstemperatur, einen Einfluss auf die Abarbeitung des Rezeptes haben, und zwar derart, dass ein Gelingen des Rezeptes nicht mehr sichergestellt ist.

Dieser Problematik konnten Verwender derartiger elektrischen Küchengeräte, die mit vorbestimmten Rezepten arbeiten, bisher nur dadurch begegnen, dass sie ihre eigene Erfahrung walten lassen und von den vorbestimmten Rezeptdaten selbst aktiv abweichen. So können z.B. die Mengen der Zutaten oder auch Verarbeitungsdauern variiert werden, um gleichwohl auch bei Bedingungen der zu verarbeitenden Nahrungsmittel bzw. bei Umgebungsbedingungen, die nicht im Standardbereich liegen, noch zu zufriedenstellenden Resultaten zu kommen. Dies ist für ungeübte Verwender jedoch schwierig, so dass die Gefahr besteht, dass in derartigen Fällen die Rezepte nicht gut gelingen.

Aus der DE-A-10 2013 106 691 ist ein System bekannt, bei welchem der Verwender der Küchenmaschine nicht erfassbar ist. Weiter ist auf die WO 2014/083029 A1 zu verweisen. Hieraus ist es bekannt, einen Benutzer zu identifizieren und einen Rezeptvorschlag für einen identifizierten Benutzer vorzunehmen.

Es ist Aufgabe der Erfindung, ein derartiges System mit einem elektrischen Küchengerät zur Verarbeitung eines Nahrungsmittels nach vorbestimmten Rezeptdaten sowie ein derartiges Verfahren zum Betrieb eines elektrischen Küchengeräts zur Verarbeitung eines Nahrungsmittels nach vorbestimmten Rezeptdaten bereitzustellen, mit denen das Gelingen eines Rezeptes in weiten Bereichen sichergestellt werden kann.

Diese Aufgabe ist hinsichtlich des Systems durch den Gegenstand des Anspruches 1 gelöst, wobei darauf abgestellt ist, dass das elektrische Küchengerät eine Verwender-Erfassungseinrichtung aufweist, mit der die Identität des Verwenders des elektrischen Küchengerätes erfassbar ist und dass eine individuelle Anpassung des abzuarbeitenden Rezeptes an den jeweiligen Verwender durchführbar ist.

Hinsichtlich des Verfahrens ist auf die Schritte abgestellt:
Erfassen wenigstens eines Parameters des in dem elektrischen Küchengerät zu verarbeitenden Nahrungsmittels oder/und eines Parameters einer Umgebungsbedingung des elektrischen Küchengeräts,
Vergleich des erfassten Parameters mit Parameterdaten, die in einem mit dem elektrischen Küchengerät verbundenen Speicher hinterlegt sind, wobei zu den im Speicher hinterlegten Parameterdaten jeweils wenigstens ein weiteres Datum hinterlegt ist, und
Übertragen des zu den hinterlegten Parameterdaten gehöhrenden weiteren Datums, das dem erfassten Parameter entspricht, und/oder eines davon abgeleiteten Datums vom Speicher an das elektrische Küchengerät, wobei mittels einer Verwender-Erfassungseinrichtung eine Identität eines Verwenders des elektrischen Küchengeräts erfasst wird und eine individuelle Anpassung eines abzuarbeitenden Rezeptes an den jeweiligen Verwender vorgenommen wird.

Damit wird die Aufgabe durch ein System gelöst, mit welchem die Identität des Verwenders erfassbar ist und hiervon ausgehend das abzuarbeitende Rezept unter individueller Anpassung an den jeweiligen Verwender durchführbar ist.

Das elektrische Küchengerät kann entsprechend einen Parameter des zu verarbeitenden Nahrungsmittels, wie dessen Konsistenz oder Wassergehalt, oder/und einen Parameter einer Umgebungsbedingung, wie Luftfeuchtigkeit, Temperatur oder auch den Aufstellungsort des elektrischen Küchengeräts, erfassen kann. In dem mit dem elektrischen Küchengerät verbundenen Speicher sind zu derartigen erfassten Parametern, vorzugsweise zu vorbestimmten Parameterbereichen, jeweils weitere Daten hinterlegt.

Vorzugsweise ist als weiterer Schritt des erfindungsgemäßen Verfahrens vorgesehen:
Ausgabe des übertragenen weiteren Datums, des übertragenen abgeleiteten Datums bzw. eines im elektrischen Küchengerät von dem übertragenen weiteren Datums abgeleiteten Datums am elektrischen Küchengerät an den Verwender.

Das weitere Datum bzw. ein davon abgeleitetes Datum kann automatisch bei der Abarbeitung der Rezeptdaten berücksichtigt werden. Das weitere Datum ist ein Korrekturdatum zu einem der vorbestimmten Rezeptdaten. Auf diese Weise können Rezeptdaten automatisch auf der Grundlage der erfassten Parameter korrigiert werden. Ist vorgesehen, dass das weitere Datum ein Informationsdatum zu dem erfassten Parameter ist, kann durch das elektrische Küchengerät zumindest automatisch vorgeschlagen werden, eine entsprechende Korrektur manuell durchzuführen. Wenn das weitere Datum ein Informationsdatum zu dem erfassten Parameter darstellt, ist jedenfalls die Ausgabe einer zusätzlichen Information zu dem erfassten Parameter möglich.

Mit anderen Worten bedeutet dies, dass das erfindungsgemäße elektrische Küchengerät spezifische Randbedingungen wie einen Parameter des in dem elektrischen Küchengerät zu verarbeitenden Nahrungsmittels oder/und einen Parameter einer Umgebungsbedingung des elektrischen Küchengeräts erfassen kann, um mittels eines Abgleichs mit im Speicher hinterlegten Informationen zu den erfassten Randbedingungen eine Verbesserung der Gelingwahrscheinlichkeit des abzuarbeitenden Rezeptes zu bewirken. Dabei kann das abzuarbeitende Rezept im Übrigen einerseits im Speicher abgelegt sein, in dem zu dem erfassten Parameter das weitere Datum hinterlegt ist, oder aber in einem davon verschiedenen Rezeptdatenspeicher.

In diesem Zusammenhang ist gemäß einer bevorzugten Weiterbildung der Erfindung vorgesehen, dass der Speicher, in dem zu dem erfassten Parameter das weitere Datum hinterlegt ist, von dem elektrischen Küchengerät entfernt vorgesehen ist. Eine Verbindung des elektrischen Küchengeräts mit diesem Speicher ist dann vorzugsweise über das Internet vorgesehen. Wie schon ausgeführt, können die Rezeptdaten grundsätzlich ebenfalls in diesem entfernten Speicher vorgesehen sein. Gemäß einer bevorzugten Weiterbildung der Erfindung sind die Rezeptdaten jedoch in einem Rezeptdatenspeicher vorgesehen, der am elektrischen Küchengerät selbst installiert ist, z.B. in Form eines eingebauten Speichers oder in Form eines am elektrischen Küchengerät vorgesehenen und von diesem entfernbaren Speichers, wie einem USB-Stick.

Das Vorsehen eines von dem elektrischen Küchengerät entfernten Speichers für die Hinterlegung der weiteren Daten zu den erfassten Parametern ermöglicht auf einfache Weise eine derartige bevorzugte Ausgestaltung der Erfindung, gemäß der dieser Speicher mit einer Mehrzahl von, vorzugsweise gleichen, elektrischen Küchengeräten verbunden ist, ebenfalls vorzugsweise über das Internet. Auf diese Weise ist es nämlich möglich, für eine Mehrzahl von elektrischen Küchengeräten, die vorzugsweise vom gleichen Typ sind, nur einen einzigen Speicher mit den jeweiligen weiteren Daten zu den erfassten Parametern bereitzustellen. Vorzugsweise ist dieser Speicher auf einem an das Internet angeschlossenen Server des Anbieters der elektrischen Küchengeräte bzw. der dafür vorgesehenen Rezeptdaten bereitgestellt.

Wie schon angesprochen, ist das weitere Datum ein Korrekturdatum zu einem der vorbestimmten Rezeptdaten, so dass z.B. bei einem höheren Wassergehalt des zu verarbeitenden Nahrungsmittels als normal ein geringeres Hinzufügen von Wasser vorgesehen wird.

Die Hinterlegung eines Verwenderdatums zu dem weiteren Datum bedeutet, dass das weitere Datum in einer derartigen Form individualisiert ist, dass es einer bestimmten Person bzw. einer bestimmten Personengruppe zugeordnet ist, die z.B. gekennzeichnet sein kann durch ihr Wissen um bzw. ihre Erfahrung mit der Herstellung von Speisen mit dem elektrischen Küchengerät. Derartige Personengruppen können vorzugsweise also sein: "Anfänger", "Fortgeschrittene" und "Experten".

Die Verwender-Erfassungseinrichtung lässt die Identität des Verwenders der Küchenmaschine erfassen. Auf diese Weise ist ein weiterer Abgleich mit den im Speicher hinterlegten Daten möglich, nämlich nicht nur hinsichtlich des erfassten Parameters des zu verarbeitenden Nahrungsmittels bzw. der Umgebungsbedingung des elektrischen Küchengeräts, sondern auch hinsichtlich der Identität des Verwenders bzw. seiner Zugehörigkeit zu einer vorbestimmten Personengruppe. Eine individuelle Anpassung des abzuarbeitenden Rezeptes an den jeweiligen Verwender des elektrischen Küchengeräts ist durchführbar. Dabei kann die Verwender-Erfassungseinrichtung des elektrischen Küchengeräts aktiv oder passiv sein. Das bedeutet, dass bei einer aktiven Verwender-Erfassungseinrichtung ohne Zutun des Verwenders seine Identität erfasst wird, z.B. mittels eines Fingerabdrucksensors oder mittels eines Augen-Scans. Alternativ dazu ist die Verwender-Erfassungseinrichtung passiv, erfordert also eine aktive Eingabe durch den Verwender hinsichtlich seiner Identität. Hierzu kann z.B. eine Tastatur, vorzugsweise in Form eines Touchscreens, vorgesehen sein, über die der Verwender seine Identität an dem elektrischen Küchengerät eingibt.

Wie zuvor schon angesprochen, kann das weitere Datum, z.B. in Form eines Korrekturdatums zu einem der vorbestimmten Rezeptdaten, grundsätzlich automatisch bei der Abarbeitung des abzuarbeitenden Rezeptes berücksichtigt werden. Eine Ausgabe des weiteren Datums an den Verwender ist dabei nicht zwingend erforderlich. Gemäß einer bevorzugten Weiterbildung der Erfindung ist jedoch vorgesehen, dass das elektrische Küchengerät eine Ausgabeschnittstelle aufweist, mittels der z.B. das Korrekturdatum zu dem vorbestimmten Rezeptdatum, das Informationsdatum zu dem erfassten Parameter und/oder ein von dem Korrekturdatum oder von dem Informationsdatum abgeleitetes Datum an den Verwender ausgebbar ist. Auf diese Weise ist es möglich, den Verwender vorerst mit der zusätzlichen Information auf der Grundlage des weiteren Datums zu versorgen. Wie der Verwender mit dieser zusätzlichen Information umgeht, ist damit ihm überlassen. Insbesondere bei erfahrenen Verwendern kann es vorteilhaft sein, lediglich einen Vorschlag für eine Korrektur der Rezeptdaten zu erhalten oder auch lediglich eine Information zu dem erfassten Parameter.

Die Verwendbarkeit des vorliegenden Systems bzw. des vorliegenden Verfahrens zum Betrieb des elektrischen Küchengeräts sind grundsätzlich bereits dadurch gegeben, dass ein Speicher mit den weiteren Daten zu den erfassten Parametern in statischer Form bereitgestellt wird. Dies bedeutet, dass der Speicher mit diesen Daten einmal vorprogrammiert wird und dann solange bereitsteht und verwendet wird, bis eine aktive Neuprogrammierung mit neuen Daten erfolgt. Besonders vorteilhaft ist es jedoch, wenn der Inhalt des Speichers dynamisch ist, und zwar insbesondere durch folgendes Verfahren:
Übertragen von vom Verwender benutzten Rezeptdaten vom elektrischen Küchengerät an den Speicher zusammen mit einem dem Verwender des elektrischen Küchengeräts entsprechendem Verwenderdatum und
Abspeichern der Rezeptdaten zusammen mit dem Verwenderdatum im Speicher für einen späteren Zugriff des elektrischen Küchengeräts auf den Speicher.

Auf die Weise ist es z.B. möglich, dem Verwender des elektrischen Küchengeräts bei dem wiederholten Benutzen eines bestimmten Rezeptes Informationen dazu zu geben, wie er bei einer vorherigen Abarbeitung des Rezeptes vorgegangen ist. Dem Verwender kann also beispielsweise die Mitteilung gegeben werden, dass er beim vorherigen Mal mehr Wasser oder weniger Salz hinzugegeben hat. Eine entsprechende frühere Abweichung von den vorab gespeicherten Rezeptdaten kann alternativ auch automatisch berücksichtigt werden.

Besonders vorteilhaft ist das Abspeichern der Rezeptdaten insbesondere dann, wenn die abgespeicherten Rezeptdaten zusammen mit dem Verwenderdatum in dem Speicher für einen Zugriff auch von einem von dem elektrischen Küchengerät verschiedenen Gerät aus bereitgestellt werden. Auf diese Weise können Erfahrungen, die ein Verwender mit bestehenden Rezeptdaten gemacht hat, mit anderen Verwendern geteilt bzw. diesen verfügbar gemacht werden. Die von dem elektrischen Küchengerät verschiedenen Geräte können jedoch nicht nur andere elektrische Küchengeräte, vorzugsweise des gleichen Typs, sein, sondern auch z.B. ein Computer des Anbieters des elektrischen Küchengeräts bzw. der zugehörigen Rezepte, so dass dieser Erfahrungen der Verwender der von ihm stammenden elektrischen Küchengeräte bei Aktualisierungen bzw. Updates der Rezeptdaten einfließen lassen kann.

Bei den zuletzt beschriebenen bevorzugten Ausgestaltungen, im Rahmen derer Rezeptdaten im Speicher abgespeichert werden, und zwar vorzugsweise zusammen mit Verwenderdaten, gilt, dass hinsichtlich dieses Abspeichern natürlich die vom Verwender tatsächlich benutzten Rezeptdaten gemeint sind, also die reellen Daten, mit denen das Rezept tatsächlich abgearbeitet worden ist. Diese reellen Daten beinhalten also einerseits aktive Korrekturen durch den Verwender sowie gegebenenfalls automatisch erfolgte Korrekturdaten aufgrund der zu den erfassten Parametern im Speicher abgelegten weiteren Daten.

Nachfolgend wird die Erfindung anhand bevorzugter Ausführungsbeispiele unter Bezugnahme auf die Zeichnung weiter erläutert.

In der Zeichnung zeigen
- Fig. 1: schematisch ein System gemäß einem bevorzugten Ausführungsbeispiel der Erfindung,
- Fig. 2: schematisch den Speicher mit den darin abgelegten Daten gemäß dem bevorzugten Ausführungsbeispiel der Erfindung, und
- Fig. 3: schematisch das System gemäß dem bevorzugten Ausführungsbeispiel der Erfindung mit weiteren elektrischen Küchengeräten sowie einem angeschlossenen Computer.

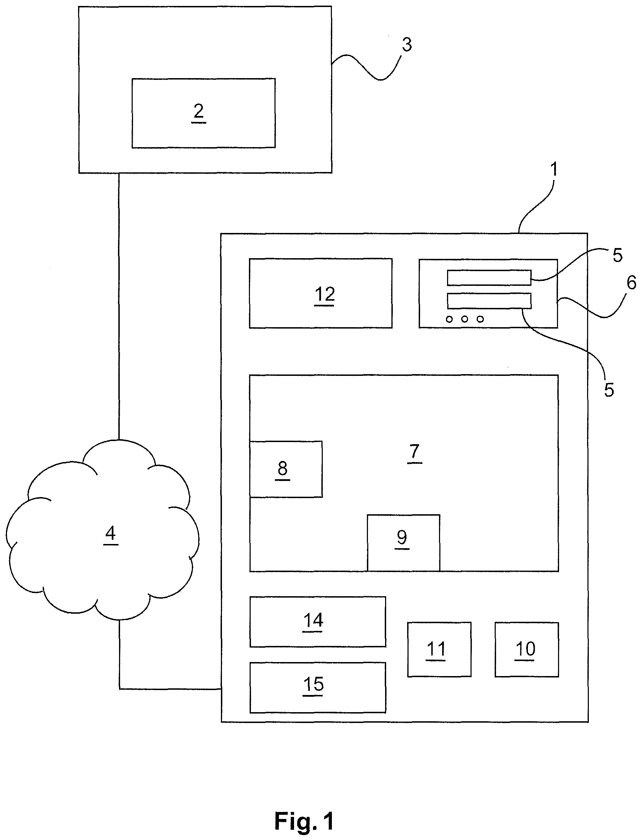

Aus Fig. 1 ist schematisch ein System mit einem elektrischen Küchengerät 1 und einem mit diesem verbundenen Speicher 2 dargestellt. Der Speicher 2 ist Teil eines Servers 3, der über das Internet 4 mit dem elektrischen Küchengerät 1 verbunden ist.

Das elektrische Küchengerät 1 ist zur Verarbeitung eines nicht weiter dargestellten Nahrungsmittels nach vorbestimmten Rezeptdaten 5 vorgesehen, die in einem in dem elektrischen Küchengerät 1 vorgesehenen Rezeptdatenspeicher 6 abgelegt sind. Der Rezeptdatenspeicher 6 ist über das Internet 4 ebenfalls mit dem Server 3 verbindbar, so dass die Rezeptdaten 5 mittels des Servers 3 aktualisierbar sind. Der Rezeptdatenspeicher 6 ist vom elektrischen Küchengerät 1 entnehmbar und dazu im Prinzip ausgestaltet wie ein USB-Stick.

Zur Verarbeitung des Nahrungsmittels in dem elektrischen Küchengerät 1 weist dieses einen Verarbeitungsraum 7 auf. Dieser Verarbeitungsraum 7 ist gemäß dem vorliegend beschriebenen bevorzugten Ausführungsbeispiel der Erfindung mit einer Nahrungsmittelparameter-Erfassungseinrichtung 8 versehen. Diese Nahrungsmittelparameter-Erfassungseinrichtung 8 ist vorliegend so ausgestaltet, dass sie die Erfassung der Parameter "Wassergehalt des zu verarbeitenden Nahrungsmittels" und "Salzgehalt des zu verarbeitenden Nahrungsmittels" ermöglicht. Darüber hinaus kann die Konsistenz, also die Festigkeit des zu verarbeitenden Nahrungsmittels, mittels eines im Verarbeitungsraum 7 vorgesehenen Rühr- und Schneidwerks 9 ermittelt werden, nämlich aufgrund des Widerstandes, das sich bei der Verarbeitung des Nahrungsmittels mit dem Rühr- und Schneidwerk 9 im Verarbeitungsraum 7 ergibt.

Zusätzlich zu der Nahrungsmittelparameter-Erfassungseinrichtung 8 weist das elektrische Küchengerät 1 gemäß dem vorliegenden bevorzugten Ausführungsbeispiel der Erfindung eine Umgebungsparameter-Erfassungseinrichtung 10 auf. Auch für diese Umgebungsparameter-Erfassungseinrichtung 10 gilt, dass diese unterschiedliche Umgebungsparameter erfassen kann, vorliegend nämlich die Parameter "Temperatur", "Luftigkeit", "Luftdruck" und auch den Parameter "Aufstellungsort des elektrischen Küchengeräts". Zur Erfassung des Aufstellungsortes des elektrischen Küchengerätes ist die Umgebungsparameter-Erfassungseinrichtung 10 mit einer nicht im Detail dargestellten GPS-Einheit versehen. Zusätzlich weist die Umgebungsparameter-Erfassungseinrichtung 10 ein ebenfalls nicht im Detail dargestelltes GSM-Modul auf, mit dem ein Zugang zu einem Mobilfunknetz und damit über die entsprechende Mobilfunkzelle, in die die Einbuchung erfolgt, eine Lokalisierung des elektrischen Küchengeräts 1 ermöglicht ist. Eine Erfassung des Aufstellungsortes des elektrischen Küchengeräts 1 gemäß dem bevorzugten Ausführungsbeispiel der Erfindung kann außerdem über den nicht weiter dargestellten Router erfolgen, über den das elektrische Küchengerät 1 Zugang zum Internet 4 erhält.

Weiterhin weist das elektrische Küchengerät 1 eine Verwender-Erfassungseinrichtung 11 auf. Diese ist vorliegend als aktive Einheit ausgestaltet, nämlich als Fingerabdrucksensor, mit dem die Identität des Verwenders des elektrischen Küchengeräts 1 eindeutig bestimmt werden kann. Die von der Verwender-Erfassungseinrichtung 11 ermittelten Daten sowie die Parameterdaten, die von der Nahrungsmittelparameter-Erfassungseinrichtung 8 bzw. von der Umgebungsparameter-Erfassungseinrichtung 10 ermittelt worden sind, werden einer zentralen Steuereinrichtung 12 zugeführt, die auch mit den anderen Einrichtungen des elektrischen Küchengeräts 1, wie dem Rühr- und Schneidwerk 9 sowie mit der Nahrungsmittelparameter-Erfassungseinrichtung 8 sowie der Umgebungsparameter-Erfassungseinrichtung 10 verbunden ist. Außerdem erhält die zentrale Steuereinrichtung 12 einerseits die Rezeptdaten 5 aus dem im elektrischen Küchengerät 1 vorgesehenen Rezeptdatenspeicher 6 und andererseits, nämlich über das Internet 4, die weiteren Daten 13, die im Speicher 2 im Server 3 abgelegt sind.

Mitteilungen des elektrischen Küchengeräts 1 an den Verwender können über eine am elektrischen Küchengerät 1 vorgesehene Ausgabeschnittstelle 14, vorliegend ein Farbdisplay, ausgegeben werden. Eingaben durch den Verwender können über eine Eingabeschnittstelle 15, vorliegend ein Touchscreen, erfolgen.

Der Betrieb des elektrischen Küchengeräts gemäß dem in Fig. 1 gezeigten bevorzugten Ausführungsbeispiel der Erfindung ist nun wie folgt:
Mit Inbetriebnahme des elektrischen Küchengeräts 1 wird der Verwender über die Ausgabeschnittstelle 14 aufgefordert, seinen Finger auf die als Fingerabdrucksensor ausgestaltete Verwender-Erfassungseinrichtung 11 zu legen. Damit wird die Identität des Verwenders des elektrischen Küchengeräts 1 erfasst, indem die Daten zu dem Fingerabdruck an die zentrale Steuereinrichtung 12 übertragen und dort mit abgespeicherten Verwenderdaten 17 verglichen werden. Das elektrische Küchengerät 1 kann dann in einem Modus arbeiten, in dem individuell Daten zu genau diesem Verwender des elektrischen Küchengeräts 1 benutzt werden, oder in einem anderen Modus, in dem festgestellt wird, was für einer Personengruppe der aktuelle Verwender angehört, also ob er z.B. als "Anfänger", "Fortgeschrittener" oder "Experte" einzuordnen ist.

Nach Auswahl eines in dem Rezeptdatenspeicher 6 abgelegten Rezeptes durch den Verwender über die Eingabeschnittstelle 15 beginnt die Abarbeitung des entsprechenden Rezeptes durch Abruf der Rezeptdaten 5 aus dem Rezeptdatenspeicher 6 in die zentrale Steuereinrichtung 12. Im Zuge der Abarbeitung der entsprechenden Rezeptdaten 5 wird der Verwender über die Ausgabeschnittstelle 14 aufgefordert, eine vorbestimmte Menge eines vorbestimmten Nahrungsmittels in den Verarbeitungsraum 7 zur dortigen weiteren Verarbeitung zu geben.

Nachdem der Verwender dieser Aufforderung entsprochen und die Beendigung des Einfüllschritts durch eine entsprechende Eingabe über die Eingabeschnittstelle 15 quittiert hat, erfasst das elektrische Küchengerät 1 automatisch mittels der Nahrungsmittelparameter-Erfassungseinrichtung 9 einerseits und der Umgebungsparameter-Erfassungseinrichtung 10 andererseits verschiedene Parameter. Gemäß dem vorliegend beschriebenen Beispiel zum Betrieb des elektrischen Küchengeräts wird mittels der Nahrungsmittelparameter-Erfassungseinrichtung 8 der Salzgehalt des Nahrungsmittels erfasst, während mit der Umgebungsparameter-Erfassungseinrichtung 10 der Luftdruck bestimmt wird. Diese erfassten Parameter werden innerhalb der zentralen Steuereinrichtung 12 mit Daten verglichen, die vom elektrischen Küchengerät 1 automatisch vom Speicher 2 des Servers 3 über das Internet 4 abgerufen werden.

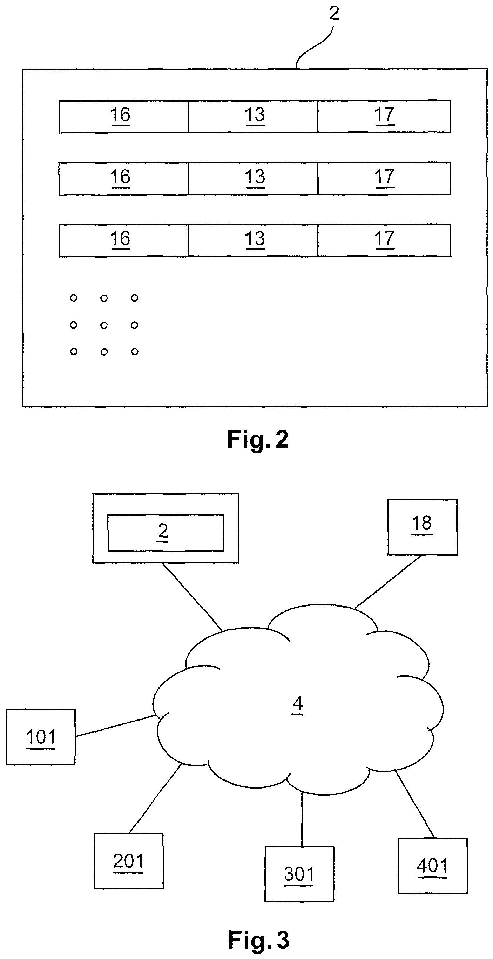

Wie in Fig. 2 ersichtlich, sind die in dem Speicher 2 abgelegten Daten so aufgebaut, dass derartige Parameterdaten 16, die vorbestimmten Bereichen der von der Nahrungsmittelparameter-Erfassungseinrichtung 8 bzw. der Umgebungsparameter-Erfassungseinrichtung 10 erfassten Parameter entsprechend, weitere Daten 13 sowie Verwenderdaten 17 zugeordnet sind. So sind verschiedenen Luftdruckbereichen als weitere Daten 13 vorbestimmte Korrekturdaten hinsichtlich der Kochzeit zugeordnet. Je geringer der Luftdruck ist, umso geringer ist auch die Siedetemperatur, was zum entsprechenden Gelingen einer Speise erfordert, dass diese Speise entsprechend länger gekocht werden muss. Dies wird durch die entsprechenden Korrekturdaten als weitere Daten 13 berücksichtigt.

Außerdem sind als Parameterdaten 16 Daten zur Konsistenz des zu verarbeitenden Nahrungsmittels hinterlegt, also zu dem Widerstand, den das Nahrungsmittel bei der Verarbeitung dem Rühr- und Schneidwerk 9 entgegensetzt. Als Korrekturdaten 13 sind hier Korrekturzeiten zur Dauer der Verarbeitung mit dem Rühr- und Schneidwerk 9 vorgesehen, nämlich derart, dass festere Nahrungsmittel mit einer festeren Konsistenz einer längeren Verarbeitungszeit bedürfen als weichere. Darüber hinaus sind als Parameterdaten 16 Daten zum Salzgehalt des zu verarbeitenden Nahrungsmittels hinterlegt, so dass als Korrekturdaten 13 Korrekturmengen des hinzuzugebenden Salzes abgespeichert sind.

Schließlich sind als weitere Daten 13 auch Informationsdaten zu bestimmten erfassten Parametern hinterlegt, und zwar spezifisch für den jeweiligen Verwender. Durch das vorherige Mitprotokollieren der Abarbeitung eines vorbestimmten Rezeptes und Ablegen der entsprechenden Informationen in dem Speicher 2 des Servers 3 kann der Verwender darauf hingewiesen werden, dass er bei der vorherigen Rezeptabarbeitung von den im Rezeptdatenspeicher 6 hinterlegten Rezeptdaten 5 abgewichen ist. So kann der Verwender mittels einer Ausgabe über die Ausgabeschnittstelle 14 darauf hingewiesen werden, dass er bei der letzten Abarbeitung des entsprechenden Rezeptes z.B. weniger Wasser hinzugegeben hat.

Genauso wie bei der Abarbeitung des Rezeptes in der Vergangenheit wird auch vorliegend wieder an den Speicher 2 des Servers 3 übertragen, welche tatsächlichen Rezeptdaten in der zentralen Steuereinrichtung 12 des elektrischen Küchengeräts 1 gemäß dem vorliegend beschriebenen bevorzugten Ausführungsbeispiel der Erfindung tatsächlich abgearbeitet werden. Auf diese Weise kommt es im Speicher 2 auf dem Server 3 zu einer individualisierten Datensammlung, die auch anderen Verwendern entsprechender elektrischer Küchengeräte 101, 201, 301 und 401 zur Verfügung gestellt werden kann, wie aus Fig. 3 schematisch ersichtlich.

Den Verwendern dieser anderen Küchengeräte 101 - 401 können also Hinweise darüber gegeben werden, wie andere Verwender, vorliegend nämlich der Verwender des elektrischen Küchengeräts 1 gemäß dem bevorzugten Ausführungsbeispiel der Erfindung, ein bestimmtes Rezept tatsächlich abgearbeitet hat. Darüber hinaus sind diese Daten auch mittels eines Computers 18 abrufbar, womit es dem Anbieter des elektrischen Küchengeräts 1 gemäß dem bevorzugten Ausführungsbeispiel der Erfindung und der entsprechenden Rezeptdaten 5 ermöglicht wird, Updates dieser Rezeptdaten 5 vorzunehmen, die dann über den Server 3 auf den Rezeptdatenspeicher 6 im elektrischen Küchengerät 1 übertragen werden können.

Im Übrigen können auch Daten aus den im Rezeptdatenspeicher 6 abgelegten Rezeptdaten 5 mit den im Speicher 2 des entfernten Servers 3 abgelegten Daten verglichen werden, so dass zu bestimmten durch das abzuarbeitende Rezept geforderten Nahrungsmitteln als weitere Daten 13 z.B. abgespeichert sein kann, wo entsprechende Nahrungsmittel in der Umgebung des Aufstellungsortes des elektrischen Küchengerätes 1 besonders günstig und/oder in besonders guter Qualität erhältlich sind.

Im Ergebnis ermöglicht die Erfindung damit eine verbesserte Anpassung der tatsächlich anzuwendenden Rezeptdaten 5 an die spezifischen Randbedingungen, unter denen das elektrische Küchengerät 1 betrieben wird. Durch das Mitprotokollieren und Abspeichern der tatsächlich abgearbeiteten Rezeptdaten kommt es darüber hinaus zu einer immer exakteren Interaktion zwischen den Vorgaben durch die im Rezeptdatenspeicher 6 abgespeicherten Rezeptdaten 5 und den Vorlieben des Verwenders. Das elektrische Küchengerät 1 muss damit nicht mehr nur ein starres Rezeptprogramm abarbeiten, sondern kann sich dem Verhalten des Verwenders und seinen Vorlieben anpassen. Diese Anpassung wird im Laufe mehrerer Abarbeitungen eines selben Rezeptes immer besser.

### Bezugszeichenliste

- 1: elektrisches Küchengerät
- 2: Speicher
- 3: Server
- 4: Internet
- 5: Rezeptdaten
- 6: Rezeptdatenspeicher
- 7: Verarbeitungsraum
- 8: Nahrungsmittelparameter-Erfassungseinrichtung
- 9: Rühr- und Schneidwerk
- 10: Umgebungsparameter-Erfassungseinrichtung
- 11: Verwender-Erfassungseinrichtung
- 12: zentrale Steuereinrichtung
- 13: weitere Daten
- 14: Ausgabeschnittstelle
- 15: Eingabeschnittstelle
- 16: Parameterdaten
- 17: Verwenderdatum
- 18: Computer
- 101: anderes Küchengerät
- 201: anderes Küchengerät
- 301: anderes Küchengerät
- 401: anderes Küchengerät

## Patentansprüche

1. System mit wenigstens einem elektrischen Küchengerät (1) zur Verarbeitung wenigstens eines Nahrungsmittels nach vorbestimmten Rezeptdaten (5) durch einen Verwender und einem, mit dem elektrischen Küchengerät (1) verbundenen Speicher (2), wobei das elektrische Küchengerät (1) eine Nahrungsmittelparameter-Erfassungseinrichtung (8) zur Erfassung wenigstens eines Parameters des zu verarbeitenden Nahrungsmittels oder/und eine Umgebungsparameter-Erfassungseinrichtung (10) zur Erfassung eines Parameters einer Umgebungsbedingung des elektrischen Küchengeräts (1) aufweist und im Speicher (2) zu dem erfassten Parameter wenigstens ein weiteres Datum (13) hinterlegt ist, **dadurch gekennzeichnet, dass** das weitere Datum (13) ein Korrekturdatum zu einem der vorbestimmten Rezeptdaten (5) ist, wobei die Rezeptdaten (5) auf diese Weise automatisch auf der Grundlage der erfassten Parameter korrigierbar sind, wobei zu dem weiteren Datum (13) ein Verwenderdatum (17) hinterlegt ist, und wobei das elektrische Küchengerät (1) eine Verwender-Erfassungseinrichtung (11) aufweist, mit der die Identität des Verwenders des elektrischen Küchengeräts (1) erfassbar ist und dass eine individuelle Anpassung des abzuarbeitenden Rezeptes an den jeweiligen Verwender durchführbar ist.

2. System nach Anspruch 1, **dadurch gekennzeichnet, dass** das elektrische Küchengerät (1) eine Ausgabeschnittstelle (14) aufweist, mittels der das weitere Datum (13) und/oder ein von dem weiteren Datum (13) abgeleitetes Datum an den Verwender ausgebbar ist.

3. System nach einem der vorhergehenden Ansprüche, **dadurch gekennzeichnet, dass** der Speicher (2) entfernt von dem elektrischen Küchengerät (1) vorgesehen ist.

4. System nach einem der vorhergehenden Ansprüche, **dadurch gekennzeichnet, dass** der Speicher (2) mit einer Mehrzahl von, vorzugsweise gleichen, elektrischen Küchengeräten (1, 101, 201, 301, 401) verbunden ist, vorzugsweise über das Internet (4).

5. Verfahren zum Betrieb eines elektrischen Küchengeräts (1) zur Verarbeitung wenigstens eines Nahrungsmittels nach vorbestimmten Rezeptdaten (5) durch einen Verwender, mit den folgenden Schritten:
Erfassen wenigstens eines Parameters des in dem elektrischen Küchengerät (1) zu verarbeitenden Nahrungsmittels oder/und eines Parameters einer Umgebungsbedingung des elektrischen Küchengeräts (1),
Vergleich des erfassten Parameters mit Parameterdaten (16), die in einem mit dem elektrischen Küchengerät (1) verbundenen Speicher (2) hinterlegt sind,
wobei zu den im Speicher (2) hinterlegten Parameterdaten (16) jeweils wenigstens ein weiteres Datum (13) hinterlegt ist, und
Übertragen des zu den hinterlegten Parameterdaten (16) gehörenden weiteren Datums (13), das dem erfassten Parameter entspricht, und/oder eines davon abgeleiteten Datums vom Speicher an das elektrische Küchengerät (1), wobei das weitere Datum (13) ein Korrekturdatum zu einem der vorbestimmten Rezeptdaten (5) ist, wobei die Rezeptdaten (5) auf diese Weise automatisch auf der Grundlage der erfassten Parameter korrigiert werden, und wobei zu dem weiteren Datum (13) ein Verwenderdatum (17) hinterlegt wird, wobei mittels einer Verwender-Erfassungseinrichtung (11) des elektrischen Küchengeräts (1) die Identität des Verwenders des elektrischen Küchengeräts (1) erfasst wird und eine individuelle Anpassung eines abzuarbeitenden Rezeptes an den jeweiligen Verwender vorgenommen wird.

6. Verfahren nach Anspruch 5 mit folgenden zusätzlichen Schritten:
Ausgabe des übertragenen weiteren Datums (13), des übertragenen abgeleiteten Datums bzw. eines im elektrischen Küchengerät von dem übertragenen weiteren Datum (13) abgeleiteten Datums am elektrischen Küchengerät (1) an den Verwender und/oder
automatische Berücksichtigung des weiteren Datums (13) des übertragenen abgeleiteten Datums bzw. eines im elektrischen Küchengerät von dem übertragenen weiteren Datum (13) abgeleiteten Datums bei der Verarbeitung des Nahrungsmittels nach den vorbestimmten Rezeptdaten (5).

7. Verfahren nach Anspruch 5 oder 6 mit den folgenden Schritten:
Vergleich eines dem Verwender des elektrischen Küchengeräts entsprechenden Verwenderdatums (17) mit einem zu weiteren Datum (13) hinterlegten Verwenderdatums (17), und
Übertragen des zu den hinterlegten Parameterdaten (16) gehörenden weiteren Datums (13), das dem erfassten Parameter entspricht, und/oder eines davon abgeleiteten Datums vom Speicher (2) an das elektrische Küchengerät (1) nur dann, wenn das erfasste Verwenderdatum dem im Speicher (2) zu dem weiteren Datum (13) hinterlegten Verwenderdatum (17) entspricht.

8. Verfahren nach einem der Ansprüche 5 bis 7 mit folgenden zusätzlichen Schritten:
Übertragen von vom Verwender benutzten Rezeptdaten vom elektrischen Küchengerät (1) an den Speicher (2), vorzugsweise zusammen mit einem dem Verwender des elektrischen Küchengeräts entsprechendem Verwenderdatum (17), und
Abspeichern der Rezeptdaten, vorzugsweise zusammen mit dem Verwenderdatum (17), im Speicher für einen späteren Zugriff des elektrischen Küchengeräts auf den Speicher (2).

9. Verfahren nach Anspruch 8, mit folgendem zusätzlichen Schritt:
Bereitstellen der abgespeicherten Rezeptdaten, vorzugsweise zusammen mit dem Verwenderdatum (17), in dem Speicher (2) für einen Zugriff von einem von dem elektrischen Küchengerät verschiedenen Gerät (101, 201, 301, 401,18) aus.

## Claims

1. A system with at least one electrical kitchen appliance (1) for the preparation of at least one food according to predetermined recipe data (5) by a user and a memory (2) connected with the electrical kitchen appliance (1), wherein the electrical kitchen appliance (1) exhibits a food parameter acquisition device (8) for acquiring at least one parameter of the food to be processed and/or an environmental parameter acquisition device (10) for acquiring a parameter of an environmental condition of the electrical kitchen appliance (1), and at least one additional data item (13) is stored in the memory (2) for the acquired parameter, **characterized in that** the additional data item (13) is a correction data item for one of the predetermined recipe data (5), wherein the recipe data (5) are automatically correctable in this way on the basis of the detected parameters, wherein a user data item (17) is deposited with the additional data item (13), and wherein the electrical kitchen appliance (1) exhibits a user acquisition device (11), with which the identity of the user of the electrical kitchen appliance (1) can be acquired, and that the recipe to be implemented can be individually adjusted to the respective user.

2. The system according to claim 1, **characterized in that** the electrical kitchen appliance (1) exhibits an output interface (14), with which the additional data item (13) and/or a data item derived from the additional data item (13) can be output to the user.

3. The system according to one of the preceding claims, **characterized in that** the memory (2) is provided remote from the electrical kitchen appliance (1).

4. The system according to one of the preceding claims, **characterized in that** the memory (2) is connected with a plurality of preferably identical electrical kitchen appliances (1, 101, 201, 301, 401), preferably via the internet (4).

5. A method for the operation of an electrical kitchen appliance (1) for processing at least one food according to predetermined recipe data (5) by a user, with the following steps:
Acquiring at least one parameter of the food to be processed in the electrical kitchen appliance (1) and/or a parameter of an environmental condition of the electrical kitchen appliance (1),
Comparing the acquired parameter with parameter data (16) stored in a memory (2) connected with the electrical kitchen appliance (1), wherein at least one additional respective data item (13) is stored for the parameter data (16) stored in the memory (2), and
Transmitting the additional data item (13) belonging to the stored parameter data item (16) corresponding to the acquired parameter, and/or a data item derived therefrom from the memory to the electrical kitchen appliance (1), wherein the additional data item (13) is a correction data item for one of the predetermined recipe data (5), wherein the recipe data (5) are automatically corrected in this way on the basis of the detected parameters, and wherein a user data item (17) is deposited with the additional data item (13), wherein a user acquisition device (11) of the electrical kitchen appliance (1) is used to acquire the identity of the user of the electrical kitchen appliance (1), and the recipe to be implemented is individually adjusted to the respective user.

6. The method according to claim 5, with the following additional steps:
Outputting the transmitted additional data item (13), the transmitted derived data item or a data item derived in the electrical kitchen appliance from the transmitted additional data item (13) on the electrical kitchen appliance (1) to the user, and/or
Automatically considering the additional data item (13) of the transmitted derived data item or a data item derived in the electrical kitchen appliance from the transmitted additional data item (13) while processing the food according to the predetermined recipe data (5).

7. The method according to claim 5 or 6, with the following additional steps:
Comparing a user data item (17) corresponding to the user of the electrical kitchen appliance with a user data item (17) stored for the additional data item (13), and
Transmitting the additional data item (13) belonging to the stored parameter data item (16) corresponding to the acquired parameter, and/or a data item derived therefrom from the memory (2) to the electrical kitchen appliance (1), only if the acquired user data corresponds to the user data item (17) stored in the memory (2) for the additional data item (13).

8. The method according to one of claims 5 to 7, with the following additional steps:
Transmitting recipe data used by the user from the electrical kitchen appliance (1) to the memory (2), preferably along with a user data item (17) corresponding to the user of the electrical kitchen appliance, and
Storing the recipe data, preferably along with the user data item (17), in the memory for later access by the electrical kitchen appliance to the memory (2).

9. The method according to claim 8, with the following additional step:
Providing the stored recipe data, preferably along with the user data item (17), in the memory (2) for access by a device (101, 201, 301, 401, 18) other than the electrical kitchen device.

## Revendications

1. Système comprenant au moins un appareil de cuisine électrique (1) pour traiter au moins un aliment selon des données de recette prédéterminées (5) par un utilisateur et une mémoire (2) reliée à l'appareil de cuisine électrique (1), dans lequel l'appareil de cuisine électrique (1) comprend un dispositif de détection de paramètre(s) d'aliment (8) pour détecter au moins un paramètre de l'aliment à traiter et/ou un dispositif de détection de paramètre environnant (10) pour détecter un paramètre d'une condition environnante de l'appareil de cuisine électrique (1) et au moins une donnée supplémentaire (13) est stockée dans la mémoire (2) pour le paramètre détecté, **caractérisé en ce que** la donnée supplémentaire (13) est une donnée de correction pour l'une des données de recette prédéterminées (5), dans lequel les données de recette (5) peuvent ainsi être automatiquement corrigées sur la base des paramètres détectés, dans lequel une donnée utilisateur (17) est stockée pour la donnée supplémentaire (13), et dans lequel l'appareil de cuisine électrique (1) comporte un dispositif de détection d'utilisateur (11) avec lequel l'identité de l'utilisateur de l'appareil de cuisine électrique (1) peut être détectée et qu'une adaptation individuelle de la recette à exécuter pour l'utilisateur respectif peut être réalisée.

2. Système selon la revendication 1, **caractérisé en ce que** l'appareil de cuisine électrique (1) comprend une interface de sortie (14) au moyen de laquelle la donnée supplémentaire (13) et/ou une donnée dérivée de la donnée supplémentaire (13) peut être fournie en sortie à l'utilisateur.

3. Système selon l'une des revendications précédentes, **caractérisé en ce que** la mémoire (2) est distante de l'appareil de cuisine électrique (1).

4. Système selon l'une des revendications précédentes, **caractérisé en ce que** la mémoire (2) est reliée à une pluralité d'appareils de cuisine électriques (1, 101, 201, 301, 401), de préférence identiques, préférablement via Internet (4).

5. Procédé de fonctionnement d'un appareil électrique de cuisine (1) pour le traitement d'au moins un aliment selon des données de recette prédéterminées (5) par un utilisateur, comprenant les étapes suivantes :
détection d'au moins un paramètre de l'aliment à traiter dans l'appareil électrique de cuisine (1) et/ou d'un paramètre d'une condition environnante de l'appareil électrique de cuisine (1),
comparaison du paramètre détecté avec des données de paramètre (s) (16) qui sont stockées dans une mémoire (2) reliée à l'appareil électrique de cuisine (1), au moins une donnée supplémentaire (13) étant mémorisée pour chaque donnée de paramètre (16) stockée dans la mémoire (2), et
transfert depuis la mémoire à l'appareil de cuisine électrique (1) de la donnée supplémentaire (13) appartenant aux données de paramètre(s) stockées (16) qui correspond au paramètre détecté et/ou d'une donnée dérivée de celle-ci, la donnée supplémentaire (13) étant une donnée de correction pour l'une des données de recette prédéterminées (5), les données de recette (5) étant ainsi automatiquement corrigées sur la base des paramètres détectés, et dans lequel une donnée utilisateur (17) est stockée pour la donnée supplémentaire (13), l'identité de l'utilisateur de l'appareil de cuisine électrique (1) étant détectée au moyen d'un dispositif de détection utilisateur (11) de l'appareil de cuisine électrique (1) et une adaptation individuelle d'une recette à exécuter pour l'utilisateur respectif étant effectuée.

6. Procédé selon la revendication 5 comprenant les étapes supplémentaires suivantes :
au niveau de l'appareil de cuisine électrique (1), fourniture en sortie à l'utilisateur de la donnée supplémentaire transférée (13), de la donnée dérivée transférée ou d'une donnée dérivée dans l'appareil de cuisine électrique à partir de la donnée supplémentaire transférée (13) et/ou prise en compte automatique de la donnée supplémentaire (13), de la donnée dérivée transférée ou d'une donnée dérivée dans l'appareil de cuisine électrique à partir de la donnée supplémentaire transférée (13) lors du traitement de l'aliment selon les données de recette prédéterminées.

7. Procédé selon la revendication 5 ou 6 comprenant les étapes suivantes :
comparaison d'une donnée utilisateur (17) correspondant à l'utilisateur de l'appareil de cuisine électrique avec une donnée utilisateur (17) stockée pour la donnée supplémentaire (13), et
transfert depuis la mémoire à l'appareil de cuisine électrique (1) de la donnée supplémentaire (13) appartenant aux données de paramètres stockées (16) qui correspond au paramètre détecté et/ou d'une donnée dérivée de celle-ci, uniquement si la donnée utilisateur détectée correspond à la donnée utilisateur (17) stockée dans la mémoire (2) pour la donnée supplémentaire (13).

8. Procédure selon l'une des revendications 5 à 7 comprenant les étapes supplémentaires suivantes :
transfert des données de recette utilisées par l'utilisateur de l'appareil de cuisine électrique (1) vers la mémoire (2), de préférence ensemble avec une donnée utilisateur (17) correspondant à l'utilisateur de l'appareil de cuisine électrique, et
enregistrement des données de recette, de préférence ensemble avec la donnée utilisateur (17), dans la mémoire pour un accès ultérieur de l'appareil électrique de cuisine à la mémoire (2).

9. Procédure selon la revendication 8, comprenant l'étape supplémentaire suivante :
mise à disposition des données de recette enregistrées, de préférence ensemble avec la donnée utilisateur (17), dans la mémoire (2) pour l'accès à partir d'un appareil (101, 201, 301, 401, 18) autre que l'appareil de cuisine électrique.
